Europäisches Patentamt

European Patent Office

Office européen des brevets

(19)

(11) Veröffentlichungsnummer : **0 107 052**
**B1**

(12) EUROPÄISCHE PATENTSCHRIFT

(45) Veröffentlichungstag der Patentschrift :
07.08.85

(21) Anmeldenummer : 83109477.6

(22) Anmeldetag : 23.09.83

(51) Int. Cl.⁴ : **B 65 G 23/06**

(54) **Band-Führungsrad mit in radialen Bohrungen geführten, radial beweglichen Mitnehmerstiften.**

(30) Priorität : 30.09.82 US 429911

(43) Veröffentlichungstag der Anmeldung :
02.05.84 Patentblatt 84/18

(45) Bekanntmachung des Hinweises auf die Patenterteilung : 07.08.85 Patentblatt 85/32

(84) Benannte Vertragsstaaten :
DE FR GB

(56) Entgegenhaltungen :
US-A- 2 842 247
US-A- 4 133 613

(73) Patentinhaber : International Business Machines Corporation
Old Orchard Road
Armonk, N.Y. 10504 (US)

(72) Erfinder : Frank, Vlastimil
107 Jackson Ct. Route No. 7
Warrenton, VA 22186 (US)

(74) Vertreter : Willich, Wolfgang, Dipl.-Ing.
Schönaicher Strasse 220
D-7030 Böblingen (DE)

EP 0 107 052 B1

## Beschreibung

Die Erfindung betrifft ein Band-Führungsrad mit in radialen Bohrungen geführten, radial beweglichen Mitnehmerstiften, die mittels Nockenfläche derart gesteuert werden, daß sie jeweils nur über einen bestimmten Teilbereich des Radumfanges aus der Mantelfläche des Führungsrades heraus in die Transportlöcher des Bandes ragen.

Zum Transport von Werkstücken verwendete Förderbänder oder -riemen werden häufig von Führungsrädern mit Mitnehmerstiften, auch Stachelradwalzen genannt, geführt. Der Vorteil einer solchen Anordnung ist, daß wegen des Formschlusses zwischen Rädern und Band bzw. Riemen ein schlupffreier Antrieb gewährleistet ist. Ein weiterer besonderer Vorzug eines solchen Antriebes liegt darin, daß bei schrittweisem Vorschub des Bandes die einzelnen Schrittlängen, wie sie durch den Drehschrittantrieb vorgegeben sind, sehr genau eingehalten werden können. Darauf kommt es insbesondere dann an, wenn sehr kleine Werkstücke mittels des Transportbandes mit großer Genauigkeit in bestimmte Positionen transportiert werden sollen. Ein Beispiel hierfür ist die Zufuhr von Halbleiterchips für elektronische Schaltungen von einer Teststation zu einer Reihe von Sortierstationen, denen die Chips in Abhängigkeit vom Ergebnis der Tests zugeführt werden sollen.

Bei derartigen Anwendungen kommt es darauf an, die Präzision der Transportschritte über eine möglichst lange Lebensdauer zu gewährleisten. Denn derartige Anlagen verarbeiten täglich bis zu 250 000 Werkstücke, wobei eine Genauigkeit bei der Positionierung der Chips an den einzelnen Zielstationen von ± 0,012 mm verlangt wird. Diese Anforderungen sind nur zu erfüllen, wenn das Zusammenwirken zwischen den Mitnehmerstiften des Führungsrades und dem Transportband mit größter Genauigkeit und störungsfrei abläuft.

Greift etwa ein Mitnehmerstift nicht genau in das entsprechende Loch des Transportbandes ein, so kann es vorkommen, daß das Band angehoben, entsprechend gespannt und unter Umständen gedehnt wird, oder die Löcher im Band ausgeweitet werden, was die Genauigkeit des Bandvorschubes beeinträchtigt und wodurch die Lebensdauer des Bandes beeinträchtigt werden kann. Auch ein vorzeitiger Verschleiß der Mitnehmerstifte wirkt sich schädlich auf die Präzision des Antriebs des Bandes aus, mit der Folge, daß die Ausrichtung der Werkstücke mit den Zielstationen unzureichend wird und Fehlsortierungen oder gar Beschädigungen der Werkstücke auftreten.

Bei Papierbahnantrieben hat man, um diesen Schwierigkeiten zu begegnen, Stachelwalzenantriebe entwickelt, bei denen die Mitnehmerstifte nur über einen Teilbereich des Radumfanges aus der Führungsfläche hervortreten. Dadurch können Fehlausrichtungen zwischen Rad und Band vermieden und die Abnutzung der Stifte verringert werden. Der letztere Gesichtspunkt ist deshalb von Bedeutung, weil die Stifte für ein optimales Eindringen in die Löcher des Bandes konisch bzw. an ihren äußeren abgerundeten Enden verjüngt ausgebildet sind, es für eine einwandfreie Verbindung zwischen Stift und Lochwandung somit wichtig ist, daß immer der gleiche Stiftbereich auf das Band wirksam wird, die Stifte also immer um genau den gleichen Betrag aus dem Führungsrad ausgefahren werden.

Dieses Erfordernis wirft ein weiteres Problem auf, nämlich die Frage des Verschleißes zwischen den Mitnehmerstiften und dem Nockenantrieb, der bei den bekannten Ausführungen üblicherweise radial auf die Stifte wirksam ist. Tritt hier nach einer entsprechenden Betriebsdauer Abnutzung auf, so werden die Stifte nicht mehr voll ausgefahren, und der nun wirksame geringere Durchmesser des Stiftes greift nicht mehr mit der ursprünglichen Genauigkeit in die Löcher des Bandes ein, was zur Folge hat, daß die Genauigkeit der Transportschritte nachläßt und häufige Wartungs- und Reparaturarbeiten notwendig werden.

Es sind verschiedene Ausführungen von Einrichtungen bekannt, bei denen die Mitnehmerstifte nur über einen Teilbereich eines Rades oder einer Walze aus der Umfangsfläche hervortreten, und zwar bei Schreibwalzen und ähnlichen Papierumführungen. Dies wird, wie in der DE-AS 26 36 387 beschrieben, entweder durch exzentrische Lagerung des Stiftrades in der Schreibwalze erreicht, oder mittels Nockenbahnen, die radial betätigend auf die Mitnehmerstifte wirksam sind, wie aus den US-PS 2 102 651, 2 815 672, 2 842 247, 4 022 365 und 4 133 613 bekannt.

Diese bekannten Ausführungen haben jedoch infolge ihres Antriebs- und Steuerungssystems verschiedene Nachteile. So treten häufig Vibrationen auf, die man bei Papierführungen in gewissen Grenzen in Kauf nehmen kann, die aber dei Transporteinrichtungen für miniaturisierte Werkstücke unbedingt verhindert werden müssen. Insbesondere sind aber die bekannten Nockenantriebe für die Transportstifte einem gewissen Verschleiß ausgesetzt, so daß die Präzision bei der Führung des zu transportierenden Mediums über längere Lebensdauer nicht gewährleistet ist.

Der Erfindung liegt die Aufgabe zugrunde, unter Vermeidung der vorgenannten Nachteile eine Anordnung der eingangs beschriebenen Gattung zu schaffen, die mit wesentlich verringertem Verschleiß arbeitet und über eine lange Lebensdauer gewährleistet, daß die Transportstifte um jeweils genau den gleichen Betrag aus dem Radkörper ausgefahren werden. Diese Aufgabe ist durch die im Patentanspruch 1 angegebene Ausbildung eines Band-Führungsrades gelöst worden. Der besondere Vorteil der erfindungsgemäßen Lösung wird darin gesehen, daß die an der radialen Auswärts- und Rückbewegung der Mitnehmerstifte beteiligten Maschinenelemente nur über einen geringen Teil des gesamten Drehbereiches überhaupt beansprucht werden und somit einem Verschleiß ausgesetzt sind, mit der Folge, daß die Genauigkeit der ausgefahrenen Position der Mitnehmerstifte über eine sehr lange Lebensdauer aufrechterhalten wird. Dementsprechend erfordert die erfindungsgemäße Anordnung einen wesentlich verringerten Wartungs- und Reparaturaufwand, so daß bei geringeren Leerzeiten ein wirtschaftlicher Einsatz erreicht wird. Überdies kann mit der erfindungsgemäßen Führungsrad-Ausbildung das Transportband vibrationsfrei bewegt werden.

Bei Verwendung eines Band-Führungsrades nach der Erfindung findet über einen Winkelbereich von etwa 300° des Führungsrades, nämlich solange sich die Mitnehmerstifte in ihrer eingefahrenen Stellung befinden, praktisch keine Reibung zwischen den an der Verstellung der Mitnehmerstifte beteiligten Elementen statt. Dies betrifft sowohl die Mitnehmerstifte als auch die Kolben als auch die Nockenscheibe und deren Verbindung zu den Kolben über Nockenfolgeelemente.

Das Führungsrad nach der Erfindung kann in üblicher Weise als Antriebsrad ausgebildet, nämlich auf der Antriebswelle eines Motors, etwa eines Schrittmotors, befestigt sein. In diesem Fall sind die Mitnehmerstifte als Antriebselemente für das Band bzw. den Riemen wirksam. Es besteht aber auch die Möglichkeit, das Führungsrad lediglich als Laufrad zur Umlenkung eines Bandes oder Riemens zu verwenden ; in diesem Fall wird das Rad unter der Wirkung des umlaufenden Bandes in Drehung versetzt, wobei die Mitnehmerstifte als Kraftübertragung, gleichzeitig aber auch als Ausrichtelemente für das Band wirksam sind.

Die Erfindung wird nachfolgend anhand der Zeichnungen in einem Ausführungsbeispiel beschrieben, nämlich in der Anwendung für den Antrieb eines Transportbandes zum Transport von Halbleiterchips aus einer Teststation in eine bestimmte Zielstation von mehreren Sortierstationen. Die Erfindung läßt sich aber auch in vielen anderen Anwendungen mit Vorteil einsetzen, insbesondere dort, wo eine sehr präzise Führung eines kontinuierlich oder schrittweise fortbewegten Bandes gefordert wird.

Es zeigen :

Figur 1 die Gesamtansicht einer Transportanlage zur Beförderung von Halbleiterchips aus einer Teststation in eine Mehrzahl von Sortierstationen,

Figur 2 eine vergrößerte Frontansicht des Transportrades der Anlage gemäß Fig. 1,

Figur 3 einen Teilschnitt in der Linie 3-3' der Fig. 2,

Figur 4 einen Teilschnitt in der Linie 4-4' der Fig. 2,

Figur 5 eine vergrößerte Detaildarstellung eines Antriebsstiftes,

Figuren 6, 7 und 8 unterschiedliche Phasen der Position des Antriebsstiftes in Bezug auf das Transportband, nämlich in der Position 30°, 60° und 90° des Führungsrades,

Figur 9 eine vergrößerte Detaildarstellung eines Kolbens für die Steuerung der Mitnehmerstifte,

Figur 10 eine vergrößerte Darstellung der Position A in Fig. 9 und

Figur 11 eine abgewickelte Darstellung der Nut der stationären Nockenscheibe zur Steuerung der Kolbenbewegungen.

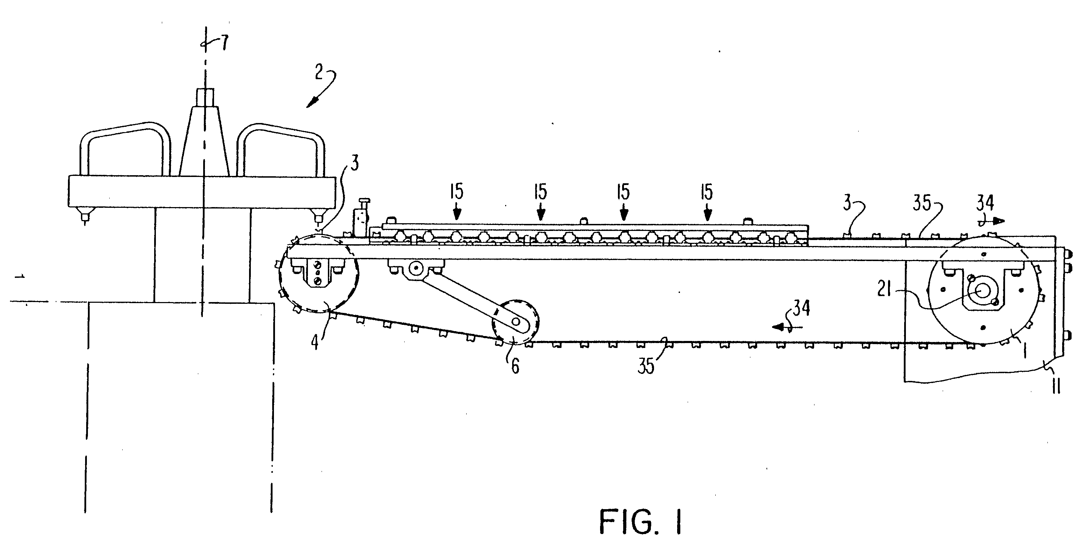

Bei der Anordnung nach Fig. 1 werden Halbleiterchips aufeinanderfolgend durch an einem Drehkopf 2 befindliche Vakuumsonden aufgenommen und auf die Elektroden eines Testgeräts aufgesetzt, wo elektrische Tests durchgeführt werden. Sodann werden die Chips mittels der Sonden, die mit dem Drehkopf 2 um die Achse 7 drehbar sind, auf entsprechende Auflagen 3 auf einem Transportband 35 abgelegt. Das Transportband befördert die Chips zu jeweils einer von einer Anzahl Sortierstationen 15, wo sie in Abhängigkeit von dem jeweiligen Testergebnis vom Band abgenommen werden.

Das Transportband 35 wird mittels eines Führungsrades 1 angetrieben, das auf einer Antriebswelle 21 drehbar gelagert ist und mittels eines im Rahmen 11 gelagerten Schrittmotors schrittweise gedreht wird. Das Band 35 wird in Richtung des Pfeiles 34 angetrieben und an dem zum Führungsrad 1 entgegengesetzten Ende über ein Umlenkrad 4 geführt sowie mittels eines Spannrades 6 unter Spannung gehalten. Zwischen den einzelnen Auflagen 3 des Bandes 35 für die Halbleiterchips besteht ein einheitlicher Abstand, z. B. 25 mm. Bei jedem Stop des Schrittantriebes muß eine genaue Ausrichtung zwischen einer Auflage 3 und der zugeordneten Sortierstation 15 unterhalb einer vorgegebenen Toleranz gewährleistet sein. Zur Einhaltung dieser Toleranz dient die nachfolgend beschriebene Gestaltung des Führungsrades 1.

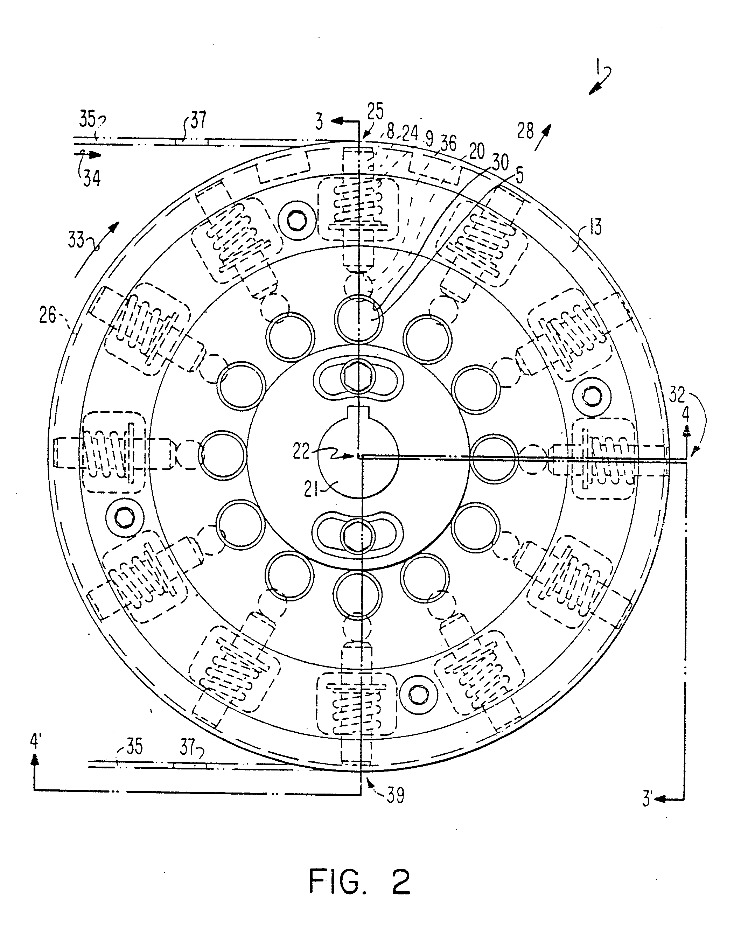

Der Radkörper 13 des Führungsrades 1 ist gemäß Fig. 2 auf einer Antriebswelle 21 zur Umdrehung um die Achse 22 gelagert. Die Antriebswelle 21 wird, wie erwähnt, mittels eines im Rahmen 11 gelagerten Schrittmotors schrittweise bewegt. Im Radkörper 13 befinden sich zwölf gleichmäßig, also unter einem Winkelabstand von jeweils 30° verteilte radiale Bohrungen 24, die in die Mantelfläche 26 des Führungsrades 1 münden. Zwölf weitere Bohrungen 30 im Führungsrad verlaufen in axialer Richtung und sind parallel zur Achse 22 um dieselbe herum angeordnet, wobei jede der Bohrungen 30 eine der radialen Bohrungen 24 schneidet.

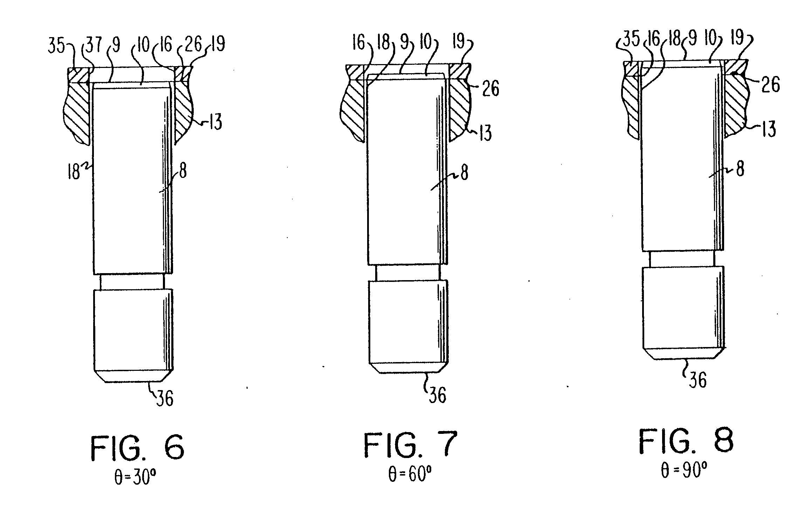

In jeder der radialen Bohrungen 24 ist ein Mitnehmerstift 8 verschiebbar geführt, derart, daß er in der radialen Richtung des Pfeiles 28 verstellt werden kann. Die Mitnehmerstifte 8 dienen zum Eingriff in jeweils eines der Löcher 37 im Band 35, wie in den Fign. 6, 7 und 8 in unterschiedlichen Positionen relativ zum Band 35 dargestellt. Hierbei erreichen sie die volle Eingriffsposition gemäß Fig. 8 in der Antriebsposition 32 (Fig. 2). Wie Fig. 2 weiter zeigt, wird das Band 35 in Richtung des Pfeiles 34 fortbewegt, entsprechend der Drehrichtung 33 des Führungsrades 1. Die Position an der oberen Seite des Radkörpers 13 des Führungsrades 1 in Fig. 2, an welcher das Band im Verlauf seiner Fortbewegung mit der Mantelfläche 26 des Führungsrades 1 in Kontakt gelangt, entspricht der Winkelposition θ = 0 und ist in Fig. 2 als Anfangsposition 25 gekennzeichnet. Die Antriebsposition 32 befindet sich dementsprechend in der 90°-Position an der rechten Seite des Radkörpers 13 in Fig. 2. An Position 25 ist der Mitnehmerstift 8, wie Fig. 2 zeigt, in seiner vollständig zurückgezogenen Stellung, so daß seine Stirnflächen nicht über die Mantelfläche 26 des Radkörpers 13 hinausragt. Mit fortschreitender Drehbewegung des Führungsrades 1 in Richtung auf die Antriebsposition 32 werden die Mitnehmerstifte zunehmend radial auswärts bewegt, bis sie an der Antriebsposition 32 voll in das Loch 37 des Bandes 35 eingreifen. Dementsprechend überträgt nun der Mitnehmerstift 8 das Drehmoment von der Antriebswelle 21 über den Radkörper 13 auf das Band 35. Im weiteren Verlauf der Drehbewegung des Radkörpers 13 von der Position 32 zur Position 39, also aus der Winkelstellung θ = 90° zur Winkelstellung θ = 180°, wird der Mitnehmerstift 8 wieder zurückgezogen und erreicht seine vollständig zurückgezogene Ausgangsstellung an der Position 39, an der das Band 35 die Mantelfläche 26 des Radkörpers 13 wieder verläßt.

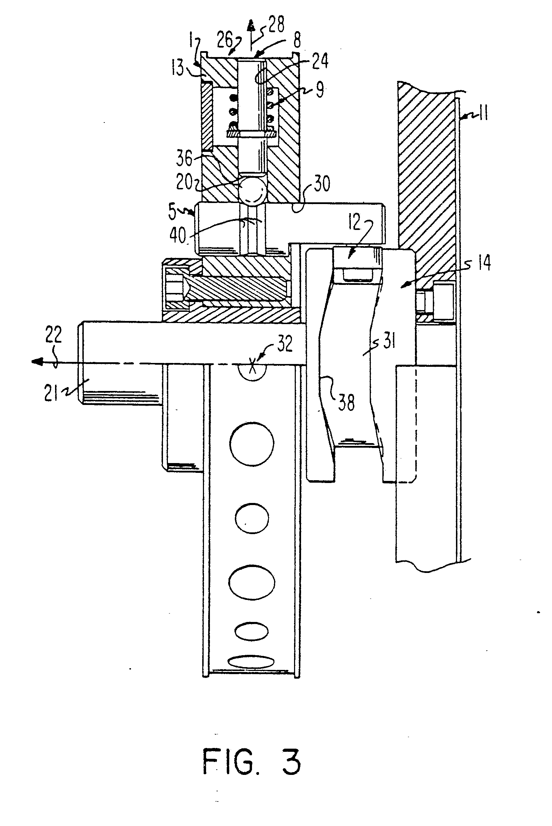

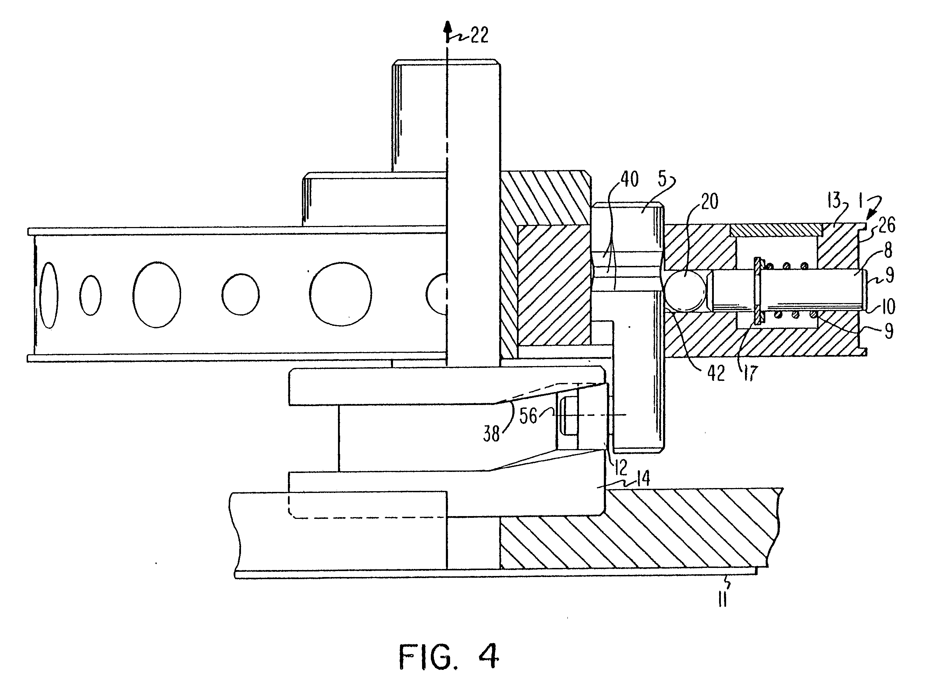

Diese Radial-Stellbewegungen der Mitnehmerstifte 8 werden durch zwölf axial beweglich geführte Kolben 5 erzeugt, die in entsprechenden axialen Bohrungen 30 geführt sind. Jeder Kolben 5 weist eine Nockenfläche 40 in Form einer Ringnut auf, wie in den Fign. 3 und 4 sichtbar ist. Wenn eine Kolben 5 bezüglich des Radkörpers 13 axial verstellt wird, drückt die Nockenfläche 40 eine Kugel 20 in radialer Richtung auswärts gegen die Stirnfläche 36 des zugeordneten Mitnehmerstiftes 8. Dieser wird daher gegen die Kraft einer Feder 9 radial auswärts verschoben. An jedem der Kolben 5 ist, wie gleichfalls in den Fign. 3 und 4 sichtbar, auf einer zum Kolben radialen Achse 56 ein Nockenfolgeelement 12 befestigt. Das Nockenfolgeelement 12 befindet sich im Eingriff in die Nut 31 einer im Rahmen 11 stationär gelagerten Nockenscheibe 14. Wenn einer der Kolben 5 und der ihm zugeordnete Mitnehmerstift 8 sich im Laufe der Drehbewegung des Radkörpers 13 der Antriebsposition 32, entsprechend einem Winkel von θ = 90°, nähert, wird das in die Nut 31 eingreifende Nockenfolgeelement 12 entsprechend der Wirkfläche 38 der Nut 31 in axialer Richtung im Sinne des Pfeiles 22 (Fig. 3) verstellt. Dementsprechend führt bei der Annäherung an die Antriebsposition 32 auch der zugeordnete Kolben 5 eine entsprechende axiale Bewegung aus, in deren Folge die Kugel 20 aus der Ringnut der Nockenfläche 40 ausgehoben wird und eine Radialverstellung des Mitnehmerstiftes 8 bewirkt, der nun über die Mantelfläche 26 des Radkörpers 13 hinaus in das entsprechende Loch des Bandes 35 ragt. Diese Position der beteiligten Elemente ist in Fig. 4 dargestellt.

Im weiteren Verlauf der Drehbewegung des Radkörpers 13, wenn sich der gerade betrachtete Mitnehmerstift aus der Antriebsposition 32 in die Position 39 bewegt, also aus der Winkelposition θ = 90° in die Winkelposition θ = 120°, wird der Kolben 5 wieder in seine Ausgangslage zurückgestellt und gibt über die Kugel 20 unter der Wirkung der Feder 9 die Rückstellung des Mitnehmerstiftes 8 in die ursprüngliche, eingefahrene Position gemäß Fig. 3 frei. In dieser Position liegt die Stirnfläche des Mitnehmerstifts 8 fluchtend mit der Mantelfläche 26 des Radkörpers 13.

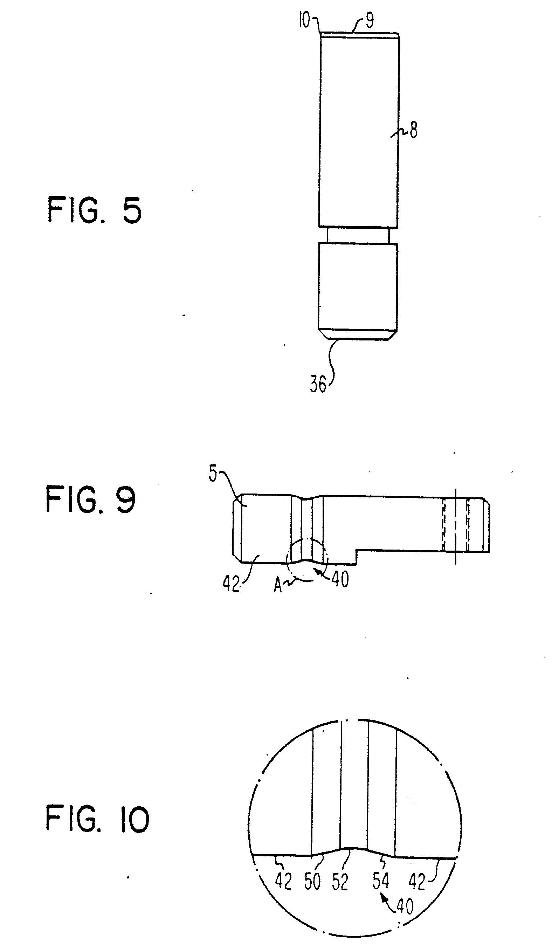

Die verschiedenen Eingriffsphasen des Mitnehmerstiftes 8 in Bezug auf das Band 35 zeigen die Fign. 6, 7 und 8. An der Stirnseite ist der Mitnehmerstift 8 mit einer Fase 10 versehen (vgl. auch Fig. 5), um den Eintritt des Mitnehmerstifts 8 in das zugehörige Loch 37 des Bandes 35 zu erleichtern. Gemäß den Fign. 6 bis 8 tritt der Mitnehmerstift, beginnend mit der Position θ = 30°, allmählich in das Loch 37 im Band 35 ein, wie in Fig. 7 für θ = 60° gezeigt, und erreicht in der Antriebsposition 32, entsprechend θ = 90° (Fig. 8) seine voll ausgefahrene Lage, in der seine Stirnfläche mit der Außenfläche 19 des Bandes 35 ausgerichtet ist. Die Fase 10 erleichtert es hierbei, wie die Fign. 6 bis 8 zeigen, durch Einwirkung auf die Bohrungswandung 16 des Bandes 35, letzteres in Bezug auf die Umfangsfläche 18 des Mitnehmerstiftes 8 genau auszurichten.

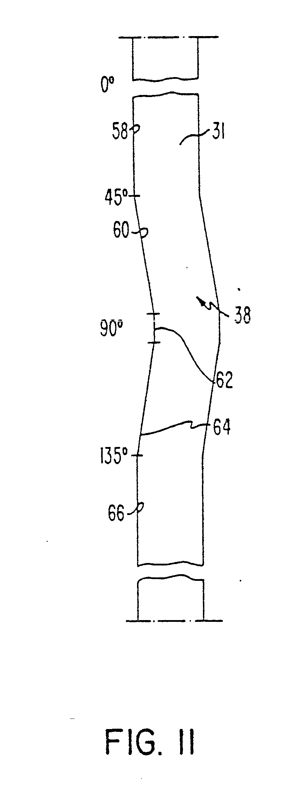

Die Fign. 9 und 10 zeigen im Detail die Ausbildung der Nockenfläche 40 für den Kolben 5. Wie aus Fig. 10 hervorgeht, in der das Detail A gemäß Fig. 9 vergrößert dargestellt ist, besteht die Nockenfläche 40 aus drei Abschnitten, nämlich einer ersten schrägen Fläche 50 und einer zweiten schrägen Fläche 54, jeweils angrenzend an die benachbarte zylindrische Umfangsfläche 42 des Kolbens 5, sowie einem zentralen Einschnittsbereich 52 mit einer Kontur, wie in Fig. 10 gezeigt. Wenn sich die Kugel 20 im Bereich des zentralen Einschnittsbereichs 52 befindet, wie in Fig. 3 dargestellt, nimmt der Mitnehmerstift 8 seine zurückgezogene Lage (Fig. 6) ein und ist im wesentlichen bündig mit der Mantelfläche 26 des Radkörpers 13. Liegt hingegen die Kugel 20 auf der zylindrischen Umfangsfläche 42 des Kolbens 5 an, wie in Fig. 4 gezeigt, so befindet sich der Mitnehmerstift 8 in seiner voll ausgefahrenen Position, so daß seine Stirnfläche im wesentlichen mit der Außenfläche 19 des Bandes 35 ausgerichtet ist, wie in Fig. 8 gezeigt.

Das Nockenfolgeelement 12 in der Position auf der Achse 56 am Kolben 5 liegt in der Nut 31 an, deren Kontur in abgewickelter Darstellung in Fig. 11 gezeigt ist. Solange sich ein bestimmtes Nockenfolgeelement 12, der zugeordnete Kolben 5, die entsprechende Kugel 20 und der zugehörige Mitnehmerstift 8 in einer Drehwinkelposition zwischen θ = 135°, durch die Position θ = 0° hindurch, und der Position θ = 45° befindet,

bleibt das Nockenfolgeelement 12 in seiner Stellung gemäß Fig. 3, in der der Mitnehmerstift 8 sich in der zurückgezogenen Stellung befindet. In diesem gesamten Drehwinkelbereich hat das Nockenfolgeelement 12 in der Nut 31 ausreichend Spiel, so daß keine nennenswerte Reibung auftritt, und die beteiligten Betätigungselemente, der Kolben 5, die Kugel 20 und der Mitnehmerstift 8 bleiben in ihrer Ruhestellung. In dieser Phase sind von den Wirkungsflächen 38 der Nut 31 die Wirkungsbereiche 58 und 66 mit linearem Verlauf maßgebend. Im Drehwinkelbereich von $\theta = 45°$ über die Position $\theta = 90°$ bis zur Position $\theta = 135°$ werden aufeinanderfolgend die Wirkungsbereiche 60, 62 und 64 der Nut 31 (Fig. 11) wirksam, so daß der Mitnehmerstift aus seiner Lage gemäß Fig. 6 über die Stellung gemäß Fig. 7 in seine ausgefahrene Position gemäß Fig. 8 (vgl. auch Fig. 4) herausgefahren und anschließend wieder zurückgestellt wird.

Die beschriebene Anordnung ist so gestaltet, daß, sobald die Rückstellbewegung eines Mitnehmerstiftes 8 in Bezug auf das Band 35 eingeleitet wird, der nächste Mitnehmerstift 8 bereits in Antriebsverbindung mit dem Band 35 ist, derart, daß während einer kurzen Zeitspanne zwei Mitnehmerstifte in gleichzeitiger Antriebsverbindung mit dem Band 35 sind.

Da die Stellbewegungen für die Mitnehmerstifte jeweils nur über einen geringen Bereich der gesamten Drehbewegung des Radkörpers 13 wirksam sind, ist demnach auch der an den beteiligten Elementen auftretende Verschleiß äußerst gering. Denn die Beanspruchung der an den Betätigungsvorgängen beteiligten Flächen der Kugel 20, des Kolbens 5, der Stirnfläche 36 des Mitnehmerstiftes 8 infolge der durch die Federn 9 über die Druckscheibe 17 ausgeübten Kräfte findet praktisch nur über einen Bereich von kaum mehr als 60° pro Umdrehung des Radkörpers 13 statt. Das gleiche gilt für die Beanspruchung des Nockenfolgeelements 12 bei dessen Zusammenwirken mit der Nut 31. Dadurch ist eine exakte Arbeitsweise über eine große Lebensdauer gewährleistet.

Bei dem zuvor beschriebenen Ausführungsbeispiel ist das Führungsrad 1 gleichzeitig Antriebsrad, indem es auf der Antriebswelle 21 eines Schrittmotors gelagert ist. Das Führungsrad 1 kann aber auch als mittels des Bandes 35 angetriebenes Rad ausgebildet sein.

### Patentansprüche

1. Band-Führungsrad mit in radialen Bohrungen (24) geführten, radial beweglichen Mitnehmerstiften (8), die mittels Nockenfläche derart gesteuert werden, daß sie jeweils nur über einen bestimmten Teilbereich des Radumfanges aus der Mantelfläche (26) des Führungsrades (1) heraus in die Transportlöcher (37) des Bandes (35) ragen, dadurch gekennzeichnet, daß der Radkörper (13) des Führungsrades (1) eine der Zahl der radialen Bohrungen (24) entsprechende Anzahl die radialen Bohrungen (24) kreuzender achsparalleler Bohrungen (30) aufweist, daß in den achsparallelen Bohrungen (30) je ein Kolben (5) längsbeweglich geführt ist, der eine Nockenfläche (40) aufweist, die bei einer Verstellbewegung des Kolbens (5) auf dem zugeordneten Mitnehmerstift (8) zu dessen Längsverstellung wirksam ist, und daß eine stationäre Nockenscheibe (14) konzentrisch zum Führungsrad (1) angeordnet ist, die über je ein an jedem der Kolben (5) befestigtes Nockenfolgeelement (12) auf den Kolben (5) wirksam ist, wobei die Kontur der Nockenscheibe (14) die Verstellbewegungen des Kolbens (5) während jeder Umdrehung des Führungsrades (1) bestimmt.

2. Band-Führungsrad nach Anspruch 1, dadurch gekennzeichnet, daß das Rad (1) auf einer Antriebswelle (21) verdrehfest befestigt ist.

3. Band-Führungsrad nach Anspruch 1, dadurch gekennzeichnet, daß zwischen der Nockenfläche (40) der Kolben (5) und der inneren Stirnfläche der Mitnehmerstifte (8) je eine Kugel (20) angeordnet ist.

4. Band-Führungsrad nach Anspruch 1, dadurch gekennzeichnet, daß die äußere Stirnfläche der Mitnehmerstifte (8) mit einer Fase (10) versehen ist.

5. Band-Führungsrad nach Anspruch 4, dadurch gekennzeichnet, daß die Fase (10) sich über eine der Dicke des Bandes (35) entsprechende Länge der Mitnehmerstifte (8) erstreckt.

6. Band-Führungsrad nach den Ansprüchen 4 und 5, dadurch gekennzeichnet, daß die Fase (10) unter einem Winkel von etwa 14° gegen die Achse der Mitnehmerstifte (8) verläuft.

7. Band-Führungsrad nach Anspruch 1, dadurch gekennzeichnet, daß die stationäre Nockenscheibe (14) eine ringförmige Nut (31) mit die Nockenfolgeelemente (12) in einem Teilbereich axial verstellenden Wirkflächen (38) aufweist.

8. Band-Führungsrad nach Anspruch 7, dadurch gekennzeichnet, daß die die Nockenfolgeelemente (12) verstellenden Wirkflächen (38) sich über einen Winkelbereich von etwa 60° erstrecken.

9. Band-Führungsrad nach den Ansprüchen 1 und 3-8, dadurch gekennzeichnet, daß das Führungsrad (1) auf einer Achse umlaufend geführt ist und mittels des Bandes angetrieben wird.

### Claims

1. Belt drive wheel with radially movable drive pins guided in radial holes (24), said pins being controlled by means of a cam surface in such a manner that they respectively protrude only over a predetermined partial section of the wheel circumference from the peripheral surface (26) of the drive wheel (1) into the transport holes (37) of the belt (35), characterized in that the wheel body (13) of the drive wheel (1) includes a number of axis-parallel holes (30) intersecting the radial holes (24), said number of axis-parallel holes corresponding to the number of radial holes (24), that in the axis-parallel holes (30) one respective plunger (5) is moving longitudinally which includes a cam surface (40) which upon an adjustment motion of the plunger (5) on the associated drive pin (8) initiates the longitudinal adjustment of the latter, and that a stationary cam disk (14) is arranged concentrically to the drive wheel (1), said disk acting on the plunger (5) via one respective cam follower (12) affixed to each of the plungers (5), the contour of the cam disk (14) determining the adjustment motions of the plunger (5) during each revolution of the drive wheel (1).

2. Belt drive wheel as claimed in claim 1, characterized in that the wheel (1) is fixed on a drive shaft (21) against rotation.

3. Belt drive wheel as claimed in claim 1, characterized in that between the cam surface (40) of the plungers (5) and the inner surface of the drive pins (8) one respective ball (20) is provided.

4. Belt drive wheel as claimed in claim 1, characterized in that the external front surface of the drive pins (8) is equipped with a bevel (10).

5. Belt drive wheel as claimed in claim 4, characterized in that the bevel (10) extends over a length of the drive pins (8) which corresponds to the thickness of the belt (35).

6. Belt drive wheel as claimed in any one of claims 4 and 5, characterized in that the bevel (10) extends at an angle of approximately 14° against the axis of the drive pins (8).

7. Belt drive wheel as claimed in claim 1, characterized in that the stationary cam disk (14) comprises an annular groove (31) with contours (38) axially adjusting the cam follower elements (12) in a partial section.

8. Belt drive wheel as claimed in claim 7, characterized in that the contours (38) adjusting the cam follower elements (12) extend over an angular range of approximately 60°.

9. Belt drive wheel as claimed in any one of claims 1 and 3 to 8, characterized in that the drive wheel (1) rotates on a shaft and is driven by the belt.

## Revendications

1. Roue de guidage de bande comportant des broches d'entraînement (8) mobiles radialement, guidées dans des trous radiaux (24) et qui sont commandées au moyen d'une surface de came de telle sorte qu'elles fassent saillie chacune de la surface périphérique (26) de la roue de guidage (1) seulement sur une zone partielle déterminée de la périphérie de la roue pour pénétrer dans les trous de transport (37) de la bande (35), caractérisée en ce que le corps (13) de la roue de guidage (1) comporte un nombre, correspondant au nombre des trous radiaux (24), de trous (30) parallèles à l'axe et croisant les trous radiaux (24), en ce que dans chacun des trous parallèles à l'axe (30) est guidé longitudinalement un piston (5) qui comporte une surface de came (40) qui, lors d'un mouvement de manœuvre du piston (5), agit sur la broche d'entraînement associée (8) pour assurer son mouvement longitudinal, et en ce qu'un disque immobile formant came (14) est disposé concentriquement à la roue de guidage (1) pour agir sur le piston (5) par l'intermédiaire d'un toucheau (12) fixé sur chacun des pistons (5), le contour du disque formant came (14) déterminant les mouvements de manœuvre du piston (5) pendant chaque révolution de la roue de guidage (1).

2. Roue de guidage de bande selon la revendication 1, caractérisée en ce que la roue (1) est fixée sur un arbre d'entraînement (21) sans possibilité de rotation relative.

3. Roue de guidage de bande selon la revendication 1, caractérisée en ce qu'il est prévu une bille (20) entre la surface de came (40) du piston (5) et la surface frontale intérieure de chaque broche d'entraînement (8).

4. Roue de guidage de bande selon la revendication 1, caractérisée en ce que la surface frontale extérieure des broches d'entraînement (8) est pourvue d'un chanfrein (10).

5. Roue de guidage de bande selon la revendication 4, caractérisée en ce que le chanfrein (10) s'étend sur une longueur de la broche d'entraînement (8) correspondant à l'épaisseur de la bande (35).

6. Roue de guidage de bande selon les revendications 4 et 5, caractérisée en ce que le chanfrein (10) est orienté selon un angle d'environ 14° par rapport à l'axe de la broche d'entraînement (8).

7. Roue de guidage de bande selon la revendication 1, caractérisée en ce que le disque stationnaire formant came (14) comporte une rainure annulaire (31) pourvue de surfaces d'actionnement (38) déplaçant axialement les toucheaux de came (12) dans une zone partielle.

8. Roue de guidage de bande selon la revendication 7, caractérisée en ce que les surfaces d'actionnement (38) déplaçant les toucheaux de came (12) s'étendent sur une plage angulaire d'environ 60°.

9. Roue de guidage de bande selon les revendications 1 et 3 à 8, caractérisée en ce que la roue de guidage (1) est guidée de façon tournante sur un axe et est entraînée au moyen de la bande.

FIG. I

0 107 052

FIG. 2

2

FIG. 3

FIG. 4

0 107 052

FIG. 5

10  9

8

36

FIG. 9

5

42  A  40

FIG. 10

42  50  52  54  42

40

FIG. 6

θ=30°

FIG. 7

θ=60°

FIG. 8

θ=90°

FIG. II